# EUROPEAN PATENT APPLICATION

(11) **EP 4 492 362 A1**
(43) Date of publication of application: **15.01.2025**
(21) Application number: 23275104.0
(22) Date of filing: 12.07.2023
(51) Int. Cl.: G09B 7/02

(54) **CLASSIFYING PERCEPTUAL SPEED OF A USER OF A USER INTERFACE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present disclosure relates to a computer-implemented method of classifying perceptual speed of a user of a user interface. The computer-implemented method comprises: displaying, on a user interface, a plurality of visual stimuli; receiving, via an input device, a response that one or more of the plurality of visual stimuli is true; calculating a perceptual speed score for the user as a number of correct true responses minus a number of incorrect true responses within a predetermined test time; and classifying the user as high perceptual speed when the perceptual speed score is above a first threshold, classifying the user as low perceptual speed when the perceptual speed score is less than a second threshold, and classifying the user as normal perceptual speed when the perceptual speed score is between the first threshold and the second threshold, wherein the first threshold is larger than the second threshold.

## Description

### FIELD OF THE INVENTION

The present invention relates to computer-implemented methods of classifying perceptual speed of a user of a user interface, computer-implemented methods of displaying content on the user interface, transitory or non-transitory computer-readable media, and user interfaces.

### BACKGROUND

User interfaces typically include a display which displays interactive content. Interactive content may be content that a user of the user interface interacts with in various ways. For example, the interactive content may be a task bar including a user input features such as search terms into a search bar. Other examples include the interactive content including a map where a user may add a way point, or point of interest, to the map. Other examples include situations where no user input is required but the interactive content involves displaying information, such as a position of a target on a radar scan to the user.

Such displays may also display peripheral information. The peripheral information may surround, or border, the interactive content. Depending on various factors such as a physical condition or fatigue of the user, the user's speed at interacting and processing the interactive content may vary. The user's performance may therefore change, which may change the influence the peripheral content has on the user's ability to interact with the interactive content.

### SUMMARY

Embodiments of the present invention are intended to improve on the prior art.

According to an aspect of the present invention, there is provided a computer-implemented method of classifying perceptual speed of a user of a user interface, the computer-implemented method comprising: displaying, on a user interface, a plurality of visual stimuli; receiving, via an input device, a response that one or more of the plurality of visual stimuli is true; calculating a perceptual speed score for the user as a number of correct true responses minus a number of incorrect true responses within a predetermined test time; and classifying the user as high perceptual speed when the perceptual speed score is above a first threshold, classifying the user as low perceptual speed when the perceptual speed score is less than a second threshold, and classifying the user as normal perceptual speed when the perceptual speed score is between the first threshold and the second threshold, wherein the first threshold is larger than the second threshold. Advantageously, being able to classify the user's perceptual speed in this way leads to improved accuracy and enables a user interface to be tailored to the individual user.

In an embodiment, each of the plurality of visual stimuli is a text string, wherein the true response corresponds to a predetermined letter existing in the text string.

In an embodiment, each of the plurality of visual stimuli includes a first number adjacent to a second number, wherein the true response corresponds the first number equalling the second number except one digit being different, wherein preferably the one digit is a single digit.

In an embodiment, the plurality of visual stimuli are arranged over a plurality of pages displayed sequentially, wherein each page includes a different set of the plurality of visual stimuli.

In an embodiment, the set of the plurality of visual stimuli on each page is arranged having visual stimuli in columns and rows.

In an embodiment, the first threshold is a 75th percentile of perceptual speed scores, and wherein the second threshold is a 25th percentile of perceptual speed score.

According to an aspect of the present invention, there is provided a computer-implemented method of displaying content on a user interface, the computer-implemented method comprising: classifying a perceptual speed of a user of the user interface using the computer-implemented method of any preceding aspect or embodiment; then, displaying interactive content for the user to interact with; and simultaneously selectively displaying peripheral content, wherein a type and an amount of peripheral content being displayed is based on the classification of perceptual speed of the user.

The peripheral content may be content that a user cannot interact with. For example, the peripheral content may be advertisements or notifications. Selectively displaying the amount and type of peripheral content based on the perceptual speed of the user enables the display to adjust to the user's abilities at interacting with the interactive content.

In an embodiment, the type of peripheral content is selected from a list of types of peripheral content including no peripheral content, congruent peripheral content, incongruent peripheral content, and a mix of congruent and incongruent peripheral content.

Congruent may be taken to mean congruent with the interactive content. In other words, a context of the peripheral content may match a context of the interactive content where the peripheral content is congruent. Conversely, the context of the peripheral content may not match the context of the interactive content where the peripheral content is incongruent.

In an embodiment, the selectively displaying the peripheral content comprises: when the user is classified as having low perceptual speed, displaying the no peripheral content type, if the no peripheral content type is unavailable, then displaying the congruent peripheral content type, if congruent peripheral content type is unavailable, then displaying the incongruent peripheral content type, and if the incongruent peripheral content type is unavailable, then displaying the mix of congruent and incongruent peripheral content type.

In an embodiment, the selectively displaying the peripheral content comprises: when the user is classified as having high perceptual speed, displaying the incongruent peripheral content type, if the incongruent peripheral content type is unavailable then displaying the mix of congruent and incongruent peripheral content type, if the mix of congruent and incongruent peripheral content type is unavailable then displaying the congruent peripheral content type, if the congruent peripheral content type is unavailable then displaying the no peripheral content type. This is particularly the case where the user is not required to memorise any of the interactive content.

In an embodiment, the selectively displaying the peripheral content comprises: when the user is classified as having high perceptual speed, displaying the no peripheral content type, if the no-peripheral content type is unavailable then displaying the incongruent peripheral content type, if the incongruent peripheral content type is unavailable then displaying the mix of congruent and incongruent peripheral content type, if the mix of congruent and incongruent peripheral content type is unavailable then displaying the congruent peripheral content type. This is particularly the case where the user is required to memorise at least some of the interactive content.

According to an aspect of the present invention, there is provided a transitory, or non-transitory, computer-readable medium, having instructions stored thereon that when executed by one or more processors, cause the one or more processors to perform the computer-implemented method of any preceding aspect or embodiment.

According to an aspect of the present invention, there is provided a user interface comprising: a display; an input device for receiving using inputs; and a controller including a processor and storage, the storage having instructions stored thereon that, when executed by the processor, cause the processor to perform the computer-implemented method of any preceding aspect or embodiment.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 shows a block diagram of a user interface according to one or more embodiments;
Figure 2 shows a test set-up page displayed on a display of the user interface of Figure 1 for a first test;
Figure 3 shows a test page displayed on the display of the user interface of Figure 1 for the first test;
Figure 4 shows a less optimal test page compared to the test page of Figure 3;
Figure 5 shows another test set-up page similar to the test set-up page of Figure 2 for a second test;
Figure 6 shows another test page similar to the test page of Figure 3 for the second test;
Figures 7a and 7b show respectively score histograms for users being tested by the first and second tests;
Figure 8 shows a scatter graph comparing user performance taking the first and second tests;
Figure 9 shows a flow chart summarising a computer-implemented method of classifying perceptual speed of a user of a user interface according to one or more embodiments; and
Figure 10 shows a flow chart summarising a computer-implemented method of displaying content on a user interface according to one or more embodiments.

### DETAILED DESCRIPTION

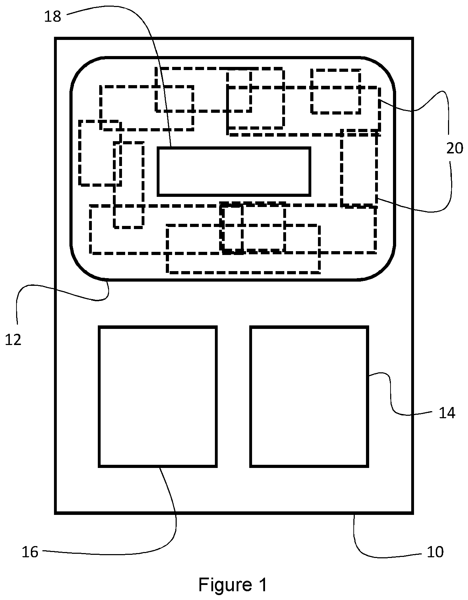

With reference to Figure 1, a user interface 10 (also called a user interface device), includes a display 12, a processor 14, and storage 16. The storage includes instructions stored thereon that, when executed by the processor, cause the processor 14 to perform any of the computer-implemented methods described herein. The instructions may be stored on non-transitory computer-readable media, which may be stored on the storage 16. The instructions may also be stored on transitory computer-readable media that may be a download when downloading instructions onto the storage 16.

The display 12 is configured to display interactive content 18 and peripheral content 20. The interactive content 18 is shown using a solid line on the display of Figure 1 because it is always present. The peripheral content 20 is shown in broken lines because it may be present in varying amounts from no peripheral content to a maximum peripheral content. The maximum peripheral content may mean that all of the space, other than space covered by the interactive content 18, is covered by peripheral content 20.

As described during testing, the interactive content may be visual stimuli used during a test. During later use of the user interface, after testing, the interactive content may be content requiring a user's attention. This may include a search bar for inputting search queries, a list of icons for a user to select between, a map where a user can select a way point for navigation, etc. Alternatively, the interactive content may not require user input, but may include information such as a radar scan showing locations of targets, e.g. ships, that a user must monitor, e.g. in a military setting.

The peripheral content 20 may include advertisements, information that is not essential for the task associated with the peripheral content 20, etc.

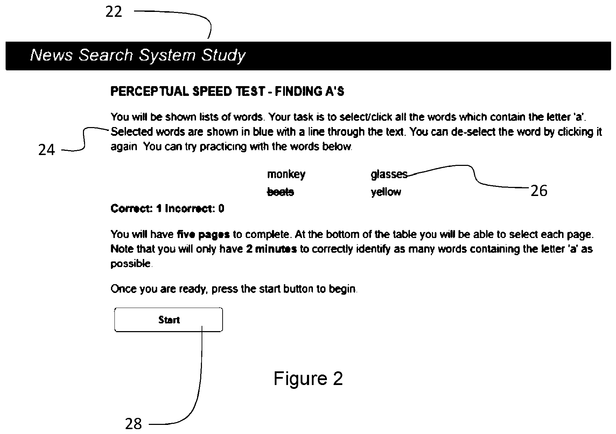

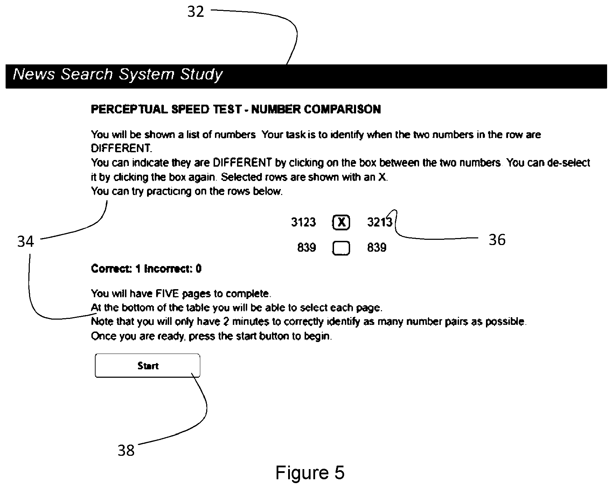

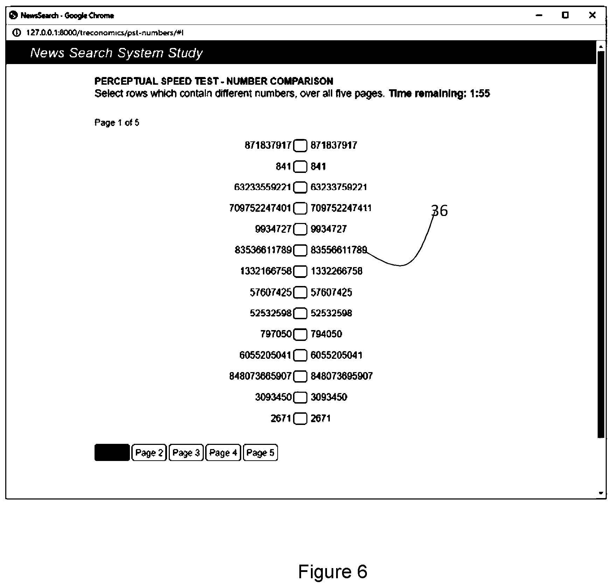

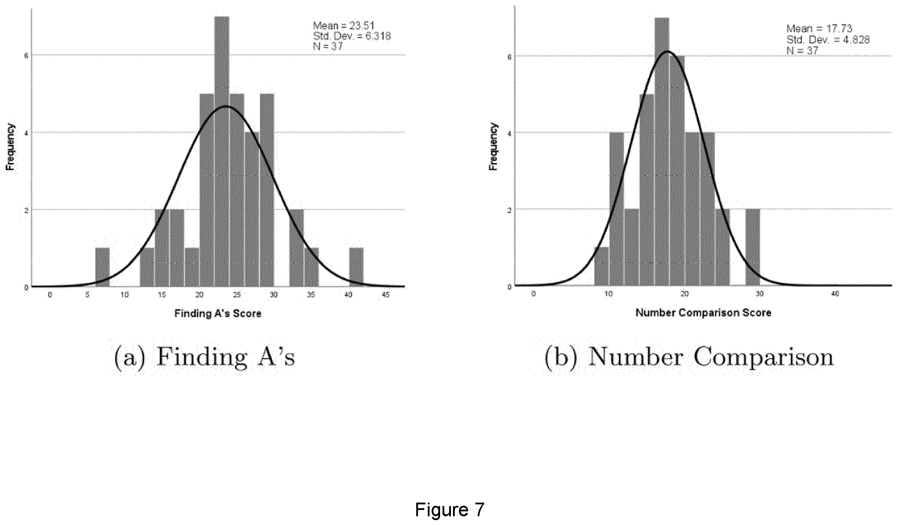

Figures 2 to 8 relate to using the user interface of Figure 1 during a testing phase. More specifically, Figures 2 to 4 relate to the testing phase when a first test is administered, Figure 5 and 6 relate to the testing phase when a second test is administered, and Figures 7 (a and b) and 8 relate to results of perceptual speed scores for users taking the first and second tests. The first test may test perceptual speed by testing a user's ability to identify a predetermined letter from a plurality of words. In this way, each of the plurality of visual stimuli is a text string, the text string being one of the words. This first test is calling a "finding A's", or FA, test. The second test is called a number comparison, or NC, test. Each visual stimuli of the second test includes a first number adjacent to a second number.

With reference to Figure 2, a testing set-up page 22 for the finding A's test is displayed on the display 12 (Figure 1). The testing set-up page 22 may also be called an instructions page. The instructions page may include instructions, 24, an example visual stimulus 26 in the form of a plurality of text strings, e.g. words, and a start button 28.

When participants would log onto the test, an instruction screen would firstly appear, which also contained an interactive opportunity for participants to practice the task and see whether they were correct or incorrect.

Once comfortable with the task, participants would begin the test by clicking the start button 28. Participants were then given two minutes to navigate five pages containing 100 words each, and select any words that contained the letter 'a' by clicking on them with their mouse cursor. When a word was clicked on, it would turn blue and contain a line scoring it out, in order to make it explicit to participants that it had been selected. In this way, the method includes receiving, via an input device, a response that one or more of the plurality of visual stimuli is true. A true response in this case thus corresponds to a predetermined letter existing in the text string.

If participants knowingly made a mistake, they could click on the word again and it would be deselected. Blue was chosen as the changeable colour, to be most similar to everyday websearch, where URLs most commonly turn blue after they have previously been clicked on in search engine result pages. On each page, 12/100 words contained the letter 'a'. With 12 targets on every page, overall, out of 500 words, 60 contained the letter 'a'. A participant's score was computed by considering how many words they correctly identified, minus how many they incorrectly identified. In this way, the method includes calculating a perceptual speed score for the user as a number of correct true responses minus a number of incorrect true responses within a predetermined test time.

The maximum score possible was therefore 60. Participants were unable to end the test when they wished, but instead, after two minutes elapsed, the test would time-out. Participants would be aware of how much time remained, as a countdown timer was visible at the top of the screen.

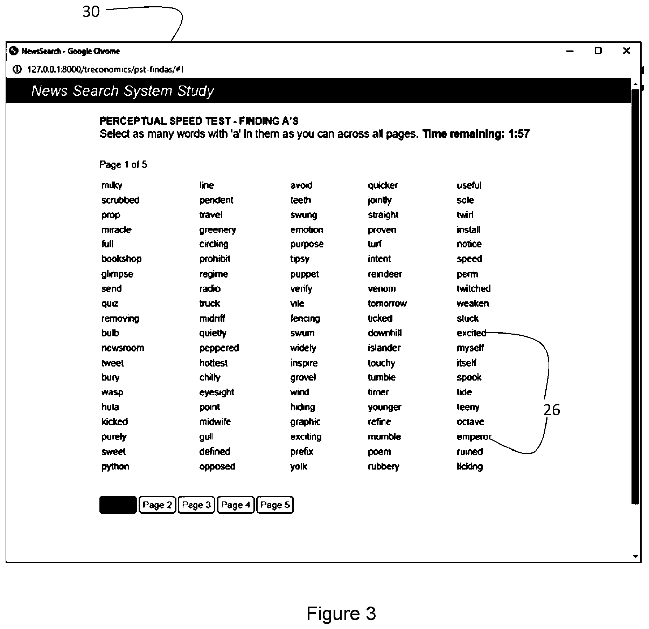

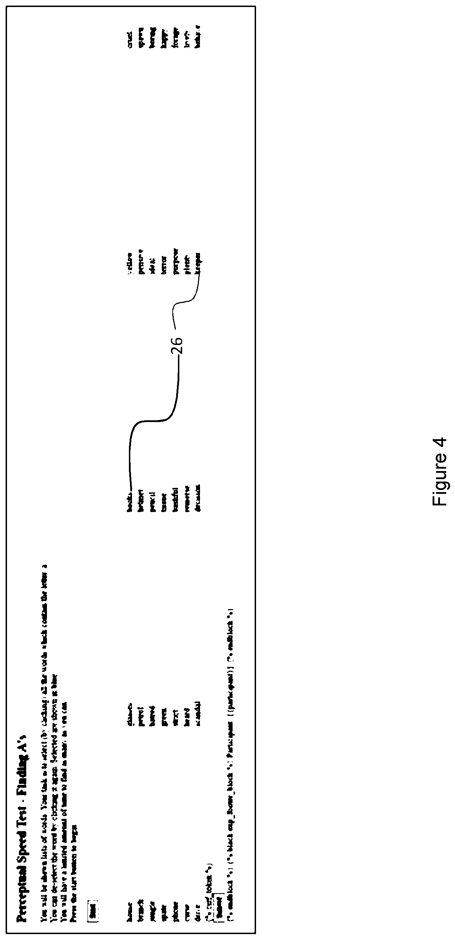

With reference to Figure 3, a test screen 30 is displayed on the test screen 12 (Figure 1). The plurality of visual stimuli are arranged over a plurality of pages displayed sequentially, wherein each page includes a different set of the plurality of visual stimuli. The set of the plurality of visual stimuli on each page is arranged having visual stimuli in columns and rows. More specifically, the words were presented in black font, across 5 columns and 20 rows, with left alignment. The black font stimuli were presented against a tinted blue background. This was specifically designed after initial prototypes using a white background-where greater spacing between columns was also used- were reported as unclear through piloting (see Figure 4). Consequently, to ensure the test was clear to participants, research was consulted involving design guidelines for coherent online search behaviour. Enclosing certain results in a border with a different coloured background could fully eliminate the presence of spillover effects. Spillover effects may be understood to mean the results from one source presented on a user interface can affect user engagement with the results from a different, completely independent source. The use of a border and shaded background was implemented such that items in the display are visually similar and perceived as a group. Consequently, the visual stimuli in the digital Finding A's test were presented as a group, by using a blue background. Furthermore, items placed near each other appear to be a group and viewers will mentally organise closer elements into a coherent object, because they assume that closely spaced elements are related and those further apart are unrelated. Therefore, each column in Finding A's was positioned slightly closer to one another, in comparison to the initial design in Figure 3.

The words were generated from The English Lexicon Project database and were filtered to: be English; range from 4-8 letters long; contain 1-3 syllables; comprise nouns, verbs, and adjectives; exclude plural, capitalisation, and distressing words; and be equal for specific lexical characteristics, including an I NMG Mean RT of 600-900, and Freq HAL > 100. The last two filters were to ensure that the words contained a similar level of emotional sentimental value, and amount of usage, in the English language. After these filters were implemented, the database exported a list of 19,935 words into a .csv file. In the adjacent empty column, a function was created to identify whether the word contained an 'a', or not: =IF(ISNUMBER(SEARCH("a",A2)), "ContainsA","No").

Once this function was executed for every row, the column was re-ordered by "Sort Ascending" which revealed 8,934 words contained an 'a', and 11,001 did not. These were then split into two documents: one with a's; and one without a's. In each document, another function was entered into an adjacent column: =RAND().

This created a random number with up to 7 decimal places. This column was then similarly re-ordered through "Sort Ascending" to mix up the order of words that had initially been retrieved from the database. The first 60 rows in the document that contained a's were then selected as the target words, and the first 440 rows in the document that contained words without an 'a' were selected as the distracting words. A new document was then opened, where the 500-word stimuli were inserted into one column. To mix the words containing 'a' and words without an 'a' together, another random number was generated adjacent to each word. This column was then re-ordered by "Sort Ascending" to reveal the final order of stimuli for the PS test. This resulted in an uneven distribution of targets in every column. For example, some columns had two words containing an 'a', whereas other columns contained three or four. This variation was favoured to ensure that participants were unable to count how many targets they were finding. For example, if they knew that 3 targets were in every column, then if they found 3 targets in the first part of the column, they might skip scanning the remaining column and this could improve their overall PS score, without actually an improvement in perceiving everything.

With reference to Figure 5, an instruction screen 32 for the NC test is displayed on the display 12 (Figure 1). The instructions screen 32 includes the same content as the instruction screen for the FA test albeit with different instructions 34 and visual stimuli 36. The instruction screen, or test set-up screen, also includes a start button 38. As above, each visual stimulus of the NC test includes two numbers, each number including a plurality of digits.

Just as was the case in the Finding A's test, when the Number Comparison test was selected, an instruction screen would firstly appear which also contained an interactive opportunity for participants to practice the task and see whether they were correct or incorrect.

Once comfortable with the task, participants would begin the test by clicking the start button 38. Participants were then given two minutes to navigate five pages containing 14 pairs of numbers each and select any that were not identical by clicking in between them, in the empty box, with their mouse cursor. When a box was clicked on, a cross would appear, in order to make it explicit to participants that it had been selected. If participants knowingly made a mistake, they could click on the cross again and it would be deselected.

On each page, between 6-8/14 pairs of numbers were not identical. Overall, out of 70 pairs of numbers, 34 were not identical. A participant's score was computed by considering how many pairs they correctly identified, minus how many they incorrectly identified. In this way, the perceptual speed score was calculated for a user as a number of correct true responses minus a number of incorrect true responses within a predetermined test time. The true response corresponds the first number equalling the second number except one digit being different, wherein preferably the one digit is a single digit. In other words, when the two numbers do not match because a single digit is different, the answer should be true, i.e. there is a mismatch. The maximum score possible was therefore 34. Participants were unable to end the test when they wished, but instead, after two minutes elapsed, the test would time-out. Participants would be aware of how much time remained, as a countdown timer was visible at the top of the screen.

With reference to Figure 6, the stimuli were presented in black font, across 3 columns (a left-hand side string of numbers, middle box, and right-hand side string of numbers) and 14 rows, with middle alignment.

The numbers were randomly generated from a website that produced a list of number strings for a set length 1. Given that the original Number Comparison test had the shortest number string of 3 numbers, 3 was also selected as the minimum number length for the digital version. Furthermore, as the original test had less numbers of shorter length, and more numbers of longer length, a similar pattern was re-produced in the digital version. Consequently, 70 strings of random numbers were generated, varying from 3 to 12 digits in length: 3x3s, 4x4s, 5x5s, 4x6s, 7x7s, 11x8s, 9x9s, 8x10s, 10x11s, and 9x12s. In order to mix up the strings-to ensure that all strings of 3 digits, 4 digits, and so on, were not together-an adjacent column was created using the excel function =RAND(). This created a random number with up to 7 decimal places for every cell. This column was then re-ordered through "Sort Ascending" to randomly mix up the order of every row, and then deleted.

Once re-ordered, the column containing the number string was duplicated so that every string of numbers had an identical string in the adjacent column. Roughly half of the number pairs (34) were to be not identical. The non-identical number pairs would only differ based on one digit, and the index of change was decided to never be the first or last digit. Consequently, the index of change could range from 2 to 11 (and thus 10 different options were possible). In order to keep a varied amount of changeable indexes, it was decided that there would be the following
index changes: 3x2s, 2x3s, 4x4s, 3x5s, 4x6s, 3x7s, 3x8s, 4x9s, 4x10s, and 4x11s.

Accordingly, an index change of a higher number, such as 11, would have to be positioned in a number string of longer length. Subsequently, the location of which pair of numbers would change was manually decided. This resulted in an uneven distribution of targets on every page. For example, some columns had 6 pairs of non-identical numbers, whereas other pages contained up to 8 pairs of non-identical numbers. This variation was favoured to ensure that participants were unable to count how many targets they were finding. For example, if they knew that 6 targets were on every page, then if they found 6 targets in the first part of the column, they might skip scanning the remaining column and this could improve their overall perceptual speed (PS) score, without actually an improvement in perceiving everything. For the numbers that were to differ, the new number that the selected index would change to was calculated randomly using a random number generator. This produced a list of numbers. If ever the new number was the same as the old number, then the new number was selected as 1 less than the old number.

Both tests involved participants scanning various lists of either words or numbers, and in two minutes, a participant's score was: how many correct words with the letter 'a' they had identified; and the amount of accurate non-identical pairs of numbers selected.

PS scores from the two tests are compared and analysed in Figures 7 (a and b) and 8.

Despite 38 participants originally completing the study, 1 participant was considered an extreme outlier and removed from further analysis as their logs demonstrated figures more than 20 times larger than the other participant logs, for the experimental search tasks. Figure 7(a) corresponds to PS scores for the Finding A's test and Figure 7(b) corresponds to PS scores for the Number Comparison test. More specifically, Figures 7a and b show the distribution of scores obtained for each PS test, respectively. Consequently, data from 37 participants who completed both PS tests were analysed. Looking at Figure 6.10, which displays the frequency histogram of scores obtained in each test, for both Finding A's and Number Comparison, the range of scores showed normal distribution. This was additionally confirmed using the Shapiro-Wilk Test, where any value greater than 0.05 demonstrated that the data was normal, as shown in Table 1 below.

**Table 1**

| | Finding A's | Number Comparison |
|---|---|---|
| Range | 7 to 40 | 9 to 28 |
| Mean | 23.51 | 17.73 |
| Median | 23 | 17 |
| Shapiro-Wilk | 0.85 | 0.542 |

As can be seen from both the histograms in Figures 7a and 7b, and table 1:
- For Finding A's, scores ranged from 7-40 (the maximum score that could have been achieved was 60), with mean 23.51, and median 23.
- For Number Comparison, scores ranged from 9-28 (the maximum score that could have been achieved was 34), with mean 17.73, and median 17.

Given the variability possible with a median categorisation of data, data in the present research was artificially categorised using extreme grouping based upon percentiles and removing 50% of the middle data. Any score under, or equal to, the 25% percentile was thus categorised as 'Low', and any score over, or equal to the 75% percentile was categorised as 'High'. In this way, the method includes classifying the user as high perceptual speed when the perceptual speed score is greater than a threshold, and classifying the user as low perceptual speed when the perceptual speed score is less than or equal to the threshold. The threshold being the 25^{th} % percentile of PS scores.

This resulted in the following number of participants in each category, as seen in Table 2 below.

**Table 2**

| | | Finding A's | Number Comparison |
|---|---|---|---|
| Score Distribution | 25% percentile | 20.5 | 15 |
| | 75% percentile | 27.5 | 21 |
| Number of Participants in each category | Low | 9 | 12 |
| | Medium | 19 | 15 |
| | High | 9 | 10 |

Whilst a user's score in Finding A's and Number Comparison can be analysed separately, the original definition of PS required at least 2 tests to be administered, in order to create an overall valid measure of PS. Yet, no explanation has ever been formally reported for how to create an overall measure. Instead, the few studies who have administered multiple tests believed they were measuring separate entities, and consequently analysed them separately. In order to determine the convergent validity between the two tests the extent to which people's scores on one measure are correlated with other measures of the same construct a user's score in both PS tests were analysed using Pearson's correlation. This revealed a correlation coefficient of 0.19, which could imply only a weak positive correlation between the two variables.

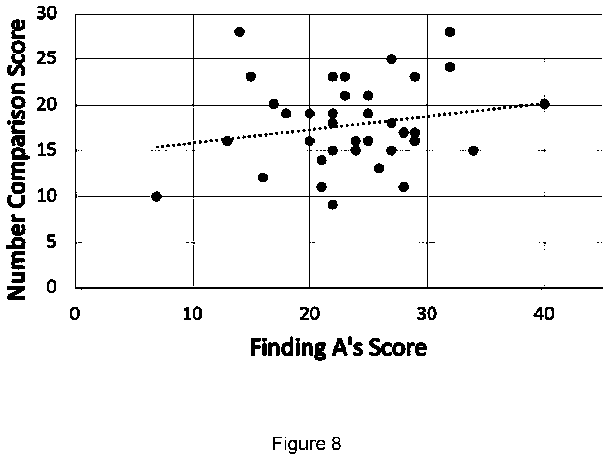

With reference to Figure 8, this was further observed when visually observing the correlation, where data can be seen dispersed as a random scatterplot. In other words, Figure 8 shows a correlation histogram of a user's score in the FA test compared to their score in the NC test.

For this reason, creating an overall measure of PS was not deemed to be appropriate through merging the results from both tests. Instead, both tests were analysed separately, and their effect on search behaviour, performance, and experience during an Interactive Information Retrieval (IIR) task were compared to identify any similarities and differences.

Users may be classified as low PS, high PS, low FA (scored low in the finding A's test), high FA (scored high in the finding A's test), low NC (scored low in the number comparison test), and high NC (scored high in the number comparison test. The threshold between high and low of each group may be the 25^{th} percentile, as with the low and high PS scores.

The term "Ads" below may be replaced with a more general term "peripheral content". For Low-FA users, although one measure of performance (Relevant Saved / Total Saved) indicated that users performed best during Congruent-Ads, their overall accuracy of how many relevant documents they had saved, out of how many they had hovered over, revealed that No-Ads was their most optimum condition. Similarly, No-Ads represented the condition where their highest post-task accuracy was also obtained. Yet whenever Incongruent-Ads or Mixed-Ads were present, their accuracy lowered in all measures of performance. Although Low-FA users maintained a similar number of document clicks during Incongruent-Ads and Mixed-Ads, as they had clicked on during No-Ads, there were less relevant clicks during Incongruent-Ads and Mixed-Ads. This implies that whenever incongruent ads were visible, either directly or as a mixture, Low-FA users were somehow distracted by incorrect information. Instead, when Congruent-Ads were visible, significantly more documents were clicked on, and their longest time overall searching was obtained. This extra time and processing of more documents enabled them to achieve accuracy that was higher than Incongruent-Ads or Mixed-Ads, but it did not compensate the negative effects of clutter overall. In terms of user experience, these results mirrored their actual performance. During No-Ads: the task was believed to be easiest; they believed they learned more; less frustration, tiredness, and annoyance was reported; but the system was ultimately perceived as the most boring. Then, the most difficult task, and most negative user experiences, were found during Incongruent-Ads and Mixed-Ads. However, whilst Congruent-Ads was generally associated with positive experiences in comparison to Incongruent-Ads and Mixed-Ads-such as more confidence-Congruent-Ads was reported as the condition with least aesthetic appeal.

For users with Low-NC , all measures of performance, both during and post-task, were best during No-Ads. Additionally, Congruent-Ads represented the best clutter condition, as worst performance was observed during Incongruent-Ads and Mixed-Ads. These results therefore correspond with Low-FA. However, whilst Low-FA spent their longest time searching during Congruent-Ads, for Low-NC , there were minimal differences in search time between clutter conditions. Yet despite this similarity of search time, during Congruent-Ads, more relevant documents were able to be clicked on, again reaffirming that Congruent-Ads represented the most optimum clutter condition. There were however differences in user experience, as reported by Low-NC users, in comparison to Low-FA users: During Congruent-Ads, Low-NC users believed they learned their least and had their least confidence, and yet this was their best clutter condition for how many concepts were recalled post-task. Furthermore, No-Ads did not represent the condition believed to be most boring: instead, the most boring was perceived as Mixed-Ads. However, for the other measures of user experience, these corresponded with their actual performance, such as during No-Ads, there was least tiredness, less frustration, and most confidence reported. Similarly, both Incongruent-Ads and Mixed-Ads were overall reported as the most annoying.

In contrast to Low-FA, High-FA users performed their best during Incongruent-Ads or Mixed-Ads, and their worst during Congruent-Ads or No-Ads. However, post-task recall remained highest during No-Ads, as had been the case for Low-FA. Despite having a poor performance during Congruent-Ads, this was the condition where High-FA clicked on the most documents and spent their most time completing the task (almost one minute longer than during Incongruent-Ads). However, Incongruent-Ads and Mixed-Ads were not the conditions where they completed their task in the fastest times, as No-Ads always represented the least amount of time searching. Despite a longer time searching during Congruent-Ads, this was actually the condition where High-FA users rated the task as easier, and learning was perceived as equivalent to Incongruent-Ads. Furthermore, other measures of user experience appeared to contrast their actual performance: Congruent-Ads was perceived as the most aesthetically appealing clutter condition; High-FA users had their most enjoyment during Congruent-Ads; and despite Incongruent-Ads and Mixed-Ads being their best search performance conditions, it was Incongruent-Ads that was rated as most tiring, and Mixed-Ads as most annoying. However, some measures of user experience did correspond with their overall performance: more frustration, and less confidence, was reported during Congruent-Ads.

Similar to High-FA, High-NC users also performed their worst during Congruent-Ads or No-Ads, but with their highest post-task recall during No-Ads. However, it was only Incongruent-Ads where users performed their best overall, and not Mixed-Ads. In terms of behaviour, Congruent-Ads was associated with the most document clicks, and Incongruent-Ads the least. Yet, more of these clicks were relevant during Incongruent-Ads, which corresponds with higher accuracy during this condition. Measures of time were then similar to High-FA: almost a minute longer was spent searching during Congruent-Ads, in comparison to Incongruent-Ads, but No-Ads was the shortest search overall. Although Incongruent-Ads was the best condition for High-NC users search performance overall, and also required less time to complete the task, it was also believed to be the most annoying system to use, the least aesthetically appealing system, and greatest levels of tiredness were reported there. Furthermore, less learning was believed to have occurred during Incongruent-Ads, even although post-task recall was equivalent between Congruent-Ads, Incongruent-Ads, and Mixed-Ads. However, the other measures of user experience did correspond with overall performance, as Congruent-Ads was rightly perceived as the most difficult and most frustrating task, and users had their least confidence and enjoyment there.

For the next passage of the description, it is worth noting the following 6 hypotheses, H1-H6.

Hypothesis 1 (H1) is that Congruent-Ads will not conform to the same negative effects of clutter for users with Low-PS, and therefore a user's search performance and experience will only be negatively affected by the presence of Incongruent-Ads.

Hypothesis 2 (H2) is that High-PS users will have positive search outcomes amidst Congruent-Ads, and negative search outcomes amidst Incongruent-Ads.

Hypothesis 3 (H3) is that both Low-PS and High-PS users will complete their search task fastest during Congruent-Ads, in comparison to Incongruent-Ads.

Hypothesis 4 (H4) is that when Congruent-Ads is visible, both Low-PS and High-PS will have more negative search outcomes and experiences, in comparison to when Incongruent-Ads is visible.

Hypothesis 5 (H5) is that when Mixed-Ads is visible, a user with Low-PS will not have a negative search performance and experience, and a user with High-PS will not have a positive search performance and experience.

Hypothesis 6 (H6) is that the effect of ads will be similar for a user, regardless of their congruence. Consequently, all ads will negatively affect a user with Low-PS, and all ads will positively affect a user with High-PS.

Given that clutter (a lot of peripheral information) has been found to affect users with different levels of PS ability differently with Low-PS being negatively affected, and High-PS being positively affected during IIR the present analysis sought to investigate the next research question of 'How does the clutter congruence impact users with different PS abilities during an IIR task?, and then (3a) Do different types of clutter impact users with different types of PS, as measured by different tests?. Summarising everything together, there were some differences between the two PS tests for the different types of clutter visible. For example, whilst users with Low-FA reported positive experiences during Congruent-Ads, Low-NC reported negative experiences there. Furthermore, although High-FA users achieved their highest search accuracy during Incongruent-Ads and Mixed-Ads, Mixed-Ads was not associated with the highest accuracy for High-NC users. However, the overall patterns remained similar between the two PS tests: the condition that users with Low-PS performed most efficiently in was always No-Ads; and Incongruent-Ads or Mixed-Ads were associated with the most negative performance and experiences. Then, for High-PS, the opposite findings occurred: Incongruent-Ads was the condition where users performed their best, and No-Ads their worst - except for post-task recall, which was always highest after No-Ads. Firstly considering the results found for users with Low-PS-with Congruent-Ads representing their best clutter condition, and anything containing incongruent ads their worst (either Incongruent-Ads or Mixed-Ads)-this corresponds with the first expectation that was hypothesised, where a user's search performance and experience would only be negatively affected by the presence of Incongruent-Ads, in comparison to Congruent-Ads (H1). These results are similar to previous research where relevant ads can reduce the perception of clutter, and therefore the final expectation (H6)-which stated that all ads would similarly affect a user's IIR- was rejected. However, relevant ads did not completely ameliorate the negative effects of clutter altogether, as users with Low-PS still performed best in the absence of clutter: they were able to expend their least amount of time, and yet gain their highest accuracy during No-Ads, demonstrating both efficiency and effectiveness. Instead, when Congruent-Ads was present, Low-PS users had to expend a lot more time completing the task, in order to gain similar levels of accuracy. This finding contrasts with previous literature, where searches were completed faster when surrounding images were congruent, and thus H3 was also rejected. Furthermore, whilst Mixed-Ads also contained clutter that was congruent, this was not associated with any benefits for users with Low-PS, which also rejects H5. One explanation for understanding why Low-PS users were able to perform better amidst Congruent-Ads, as opposed to when any incongruent information was visible (either directly during Incongruent-Ads, or as a mixture during Mixed-Ads), refers to the fact that Low-PS are known to have a lower eye fixation rate and struggle with processing what is in front of them. Consequently, they may be unable to "dump" additional information in order to reduce their cognitive strain, and subsequently get distracted by visible ads. Given that images have the power to convey meaning instantly whilst overcoming language barriers, if incongruent-ads are processed, these might provide false information to the Low-PS user that they are performing incorrectly. Additionally, users may become more frustrated, as incongruent-ads require a greater cognitive effort to process, because a user must expend energy in working out why they have been shown something off-topic. Indeed, in the present study, Low-PS users did report more frustration after Incongruent-Ads or Mixed-Ads, in comparison to Congruent-Ads, which adds further support to this explanation. Furthermore, this explanation is akin to previous work done with users with dyslexia, who similarly have lower visual processing abilities, but who have noted a preference for topical images that help support their understanding of the search: congruent ads ease information processing as users see more sense, or logic, in congruent associations, and viewing a topical image can verify that the query issued matched the initial concept a user had in mind, which reassured the user that they were searching successfully. Although Congruent-Ads was the most beneficial clutter condition for users with Low-PS, this was not the case for users with High-PS. Instead, High-PS users performed their best searches during Incongruent-Ads and Mixed-Ads, which rejects H2, H5, and H6.

This was despite the fact that Congruent-Ads was associated with increased interaction for High- PS users -with more document clicks and a significantly longer time spent completing the task- and this corresponded to previous research which found that relevant images increased participant interaction. Yet whilst increased interaction has previously been found to lead to better search outcomes, this did not happen in the current experiment. Instead, High-PS demonstrated more positive performance measures in Incongruent-Ads where they had interacted with the search system less. However, given that Congruent-Ads represented the clutter condition where worst performance occurred, this supported H4. However, Congruent-Ads was also the condition where High-FA users spent their longest time searching, and for High-NC users, searches during Congruent-Ads were completed almost a minute longer than Incongruent-Ads. Therefore, H3 was rejected, which expected searches to be completed fastest during Congruent-Ads. This finding was similar to users with Low-PS, and thus also contrasts with previous literature, where searches were completed faster when surrounding images were congruent. Given that users with High-PS are known to be able to scan accurately and quickly, it is perhaps surprising that they took so much longer examining Congruent-Ads, to then not achieve higher performance in terms of relevant documents saved or the accuracy of how many relevant documents saved had been hovered on. Instead, it appeared that Congruent-Ads were somehow negatively distracting users, to spend more time on the task, but click on less relevant documents. Indeed, when Congruent-Ads had been present, a clear trend emerged that more frustration was reported, in comparison to any other condition. This contrasts with Low-PS, where more frustration was observed during Incongruent-Ads, presumably because a user had to expend more energy in working out why they had been shown something off-topic. Therefore, understanding why Incongruent-Ads did not similarly frustrate users with High-PS remains open to interpretation. One possible explanation is that users with High-PS attended more to congruent-ads-which corresponds with previous research- and thus too much attention was focused on the clutter, instead of the task. The use of eye-tracking in future studies should help to either accept or reject this theory. Alternatively, another explanation refers to High-PS users being able to process more visual information, and thus they are easily able to identify that the Congruent-Ads ads are on topic. Consequently, as High-PS users may realise that their search results do not exactly match the ads visible, it is possible that they continued their search until they could directly match an ad with the content of a document, even if it did not answer the task aim properly. However, this is just one hypothesis
and more research would be needed to fully understand this. Although Congruent-Ads was associated with more frustration for High-PS users, for many of the other measures of user experience, these appeared to contradict their actual performance. For example, more enjoyment occurred during Congruent-Ads, whereas Incongruent-Ads was perceived as most tiring. One theory for this contradiction could have referred to the user experience being determined based on post-task recall, instead of active search performance. However, this was not the case, because similar recall was observed in Incongruent-Ads, as was found in Congruent-Ads. An explanation that High-PS users were just unaware of their search performance seems plausible, and this would correspond with previous research that has identified perception differs from actual performance. This would then further confirm that High-PS and Low-PS have very difficult search experiences, with Low-PS being more aware of their performance. Further comparing Low-PS against High-PS, it is evident that different search strategies were implemented, as well as different experiences. Specifically, when No-Ads was present, Low-PS users were able to achieve their best search performance in the least amount of time, whereas High-PS did their worst search in their least time there. Why High-PS users abandoned their search when No-Ads was visible, may have been due to increased boredom. However, Low-PS users also perceived most boredom during No-Ads, out of any other condition. This therefore indicates that boredom is responded to differently, depending on a user's PS ability, and subsequently should be further investigated in future research. Yet despite many differences between Low-PS and High-PS, one similarity refers to how users perceived the Mixed-Ads condition. Although opposing results occurred-with Low-PS performing badly, and High-PS generally doing well there-Mixed-Ads was always perceived similarly to Incongruent-Ads; it was never associated with similar patterns to Congruent-Ads. For example, Low-PS users struggled during both Incongruent-Ads and Mixed-Ads, and High-PS benefited from Incongruent-Ads and Mixed-Ads. This suggests that the presence of incongruent information was dominating the congruent information. Why this occurred remains unknown. However, given that Mixed-Ads was probably most similar to what would usually be visible, because retrieval algorithms that attempt to provide congruent ads do not always succeed, which results in a mixture of congruent and incongruent-ads visible simultaneously. It is therefore possible that the Mixed-Ads condition was most akin to what users have normally experienced online, and this would correspond with why previous literature believed that Low-PS perform poorer searches, and High-PS are more accurate.

Bringing all results together, there are two main implications based upon the current experiment. Firstly, given that the overall pattern of results remain similar between how a Low and High user in two different PS tests performed during an IIR task, this further validates that the two tests appear to be measuring the same concept of PS. However, as some differences were observed, this highlights that there are subtle differences between the two. Secondly, suggestions for designing future system development that can be tailored to suit the individual user are as follows. If a user with Low-PS must complete a specific search goal, then every effort must be made to remove Incongruent-Ads from the display. Although congruentclutter could be visible, this should only be in tasks where time is not an important factor. Instead, considering that High-PS users actually perform better when incongruent-clutter surrounds their search, either incongruent, or a mixture of incongruent and congruent clutter should be visible. Ranking algorithms that aim to retrieve relevant advertising should thus be reversed, so that irrelevant advertising appears. However, if a user with High-PS has to perform a task where they must prioritise their memory, then No-Ads would be the most optimal condition, and adblockers should be implemented. Given the different optimal conditions for users with different PS ability, and depending on the task priority, these findings highlight the need for future systems to be dynamic and adapt to the user, based on their individual differences, alongside the task goal. This aligns with the aims of other research in the area, which has attempted to predict PS based upon eye-gaze, so that dynamic systems can be created. However, only the present research remains the first to have provided evidence of what an optimal search environment could look like: for Low-PS, the order of preference, from most to least, would be No-Ads, then Congruent-Ads, and then Incongruent-Ads or Mixed-Ads; and for High-PS, it would be Incongruent-Ads or Mixed-Ads, followed by Congruent-Ads, and then No-Ads (unless memory was required). If memory was required, even High-PS users should search amongst No-ads as the most preferable, just like was stated above. Whilst this implementation would be the most ideal, at first, it may be difficult to accomplish, as ranking algorithms that aim to retrieve relevant advertising do not have a 100% success rate. However, further research may be able to suggest ways around this. Specifically, it may be possible that only ads in certain locations are influencing users, and thus this could guide where relevance ranking algorithms should position the most relevant, or least relevant ads. As the location of the clutter was not presently studied, this highlights one limitation of the current experiment. Future research should therefore explore whether the location of clutter impacts a user with different PS ability. Other research has identified that right-hand side ads capture more attention in comparison to banner ads, and therefore this motivates that differences in search performance may be influenced by clutter location. Additionally, although every effort was made to keep ads consistent between conditions, we only considered ads to be topical or off-topic, and no other factors such as reputation of sponsor were considered. Given that clutter can be affected by various factors other than congruence, such as the colours present or size of visible input, it is possible that different types of ads could impact users differently. For example, animations may not result in the same clutter effects as the static banners used in the present experiment. Thus with further research examining whether different kinds of ads conform to the same effects of congruent and incongruent clutter with users of varied PS ability, this will eventually lead to the most optimum systems that can accommodate and benefit search outcomes for every user.

The foregoing may be summarised by Tables 3 to 5, which summarise how each group responds to various tests and stimuli.

**Table 3**

| | No peripheral content | Maximum peripheral content |
|---|---|---|
| Performance | Low-PS achieved highest accuracy | High-PS achieved highest accuracy |
| Time | Low-PS were significantly faster | High-PS took more time |
| Behaviour | Low-FA clicked less; Low-NC clicked more | High-PS clicked more |
| Experience | Both low-PS & high-PS: thought the task was easier to complete; believed they learned more; and reported less frustration. | High-PS: more aesthetic appeal; Low-PS: more tiredness. |

**Table 4**

| | | Low FA | Low NC |
|---|---|---|---|
| Accuracy | Best | No-peripheral content | No-peripheral content |
| | Worst | Incongruent & mixed | Incongruent & mixed |
| Memory | Best | No-peripheral content | No-peripheral content |
| | Worst | Incongruent & mixed | Incongruent |
| Search Time | Shortest | No-peripheral content, | No-peripheral content |
| | | incongruent & mixed | |
| | Longest | Congruent | Any peripheral content |
| User Experience | Positive | No-peripheral content | No-peripheral content |
| | Negative | Incongruent & mixed | Incongruent & mixed |

**Table 5**

| | | High-FA | High-NC |
|---|---|---|---|
| Accuracy | Best | Incongruent & mixed | Incongruent & mixed |
| | Worst | No-peripheral content & congruent | No-peripheral content & congruent |
| Memory | Best | No-peripheral content | No-peripheral content |
| | Worst | Mixed-peripheral content | Mixed-peripheral content |
| Search Time | Shortest | No-peripheral content | No-peripheral content |
| | Longest | Congruent & mixed | Congruent & mixed |
| User Experience | Negative | More frustration = congruent | More frustration = congruent |
| | | More tiredness = incongruent | More tiredness = incongruent |

With knowledge of such information about each group class, a user interface has been devised which can optimise the performance and amount of peripheral content per viewed based on their PS test results.

For instance, with further reference to Figure 1, according to one or more embodiments, a computer-implemented method of displaying content on a user interface, the computer-implemented method comprising: classifying a perceptual speed of a user of the user interface; then, displaying interactive 18 content for the user to interact with; and simultaneously selectively displaying peripheral content 20, wherein a type and an amount of peripheral content 20 being display is based on the classification of perceptual speed of the user.

In view of the above, the selectively displaying the peripheral content comprises: when the user is classified as having low perceptual speed, displaying the no peripheral content type, if the no peripheral content type is unavailable, then displaying the congruent peripheral content type, if congruent peripheral content type is unavailable, then displaying the incongruent peripheral content type, and if the incongruent peripheral content type is unavailable, then displaying the mix of congruent and incongruent peripheral content type.

As described above, the type of peripheral content is selected from a list of types of peripheral content including no peripheral content, congruent peripheral content, incongruent peripheral content, and a mix of congruent and incongruent peripheral content.

When the user is classified as having high perceptual speed, displaying the incongruent peripheral content type, if the incongruent peripheral content type is unavailable, then displaying the mix of congruent and incongruent peripheral content type, if the mix of congruent and incongruent peripheral content type is unavailable, then displaying the congruent peripheral content type, if the congruent peripheral content type is unavailable, then displaying the no peripheral content type. This is particularly the case where no memory is required. If memory is required, the preference of display should be no peripheral content.

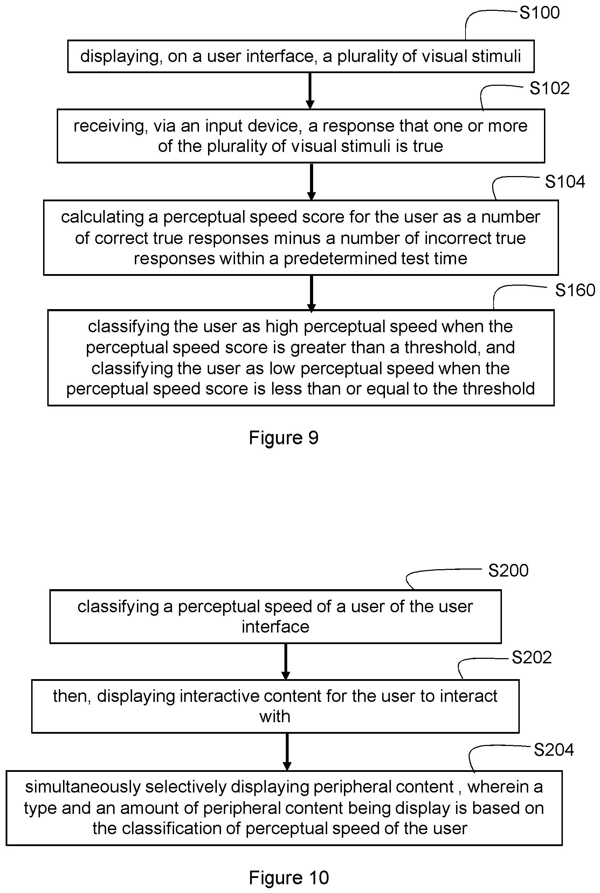

With reference to Figure 9, a computer-implemented method of classifying perceptual speed of a user of a user interface is summarised as including the steps of: displaying S100, on a user interface, a plurality of visual stimuli; receiving S102, via an input device, a response that one or more of the plurality of visual stimuli is true; calculating S104 a perceptual speed score for the user as a number of correct true responses minus a number of incorrect true responses within a predetermined test time; and classifying S106 the user as high perceptual speed when the perceptual speed score is greater than a threshold, and classifying the user as low perceptual speed when the perceptual speed score is less than or equal to the threshold.

With reference to Figure 10, a computer-implemented method of displaying content on a user interface is summarised as including the steps of: classifying S200 a perceptual speed of a user of the user interface (using the method of classifying perceptual speed of a user of a user interface summarised in Figure 9); then S202, displaying interactive content for the user to interact with; and simultaneously selectively displaying S204 peripheral content, wherein a type and an amount of peripheral content being display is based on the classification of perceptual speed of the user.

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A computer-implemented method of classifying perceptual speed of a user of a user interface, the computer-implemented method comprising:
displaying, on a user interface, a plurality of visual stimuli;
receiving, via an input device, a response that one or more of the plurality of visual stimuli is true;
calculating a perceptual speed score for the user as a number of correct true responses minus a number of incorrect true responses within a predetermined test time; and
classifying the user as high perceptual speed when the perceptual speed score is above a first threshold, classifying the user as low perceptual speed when the perceptual speed score is less than a second threshold, and classifying the user as normal perceptual speed when the perceptual speed score is between the first threshold and the second threshold, wherein the first threshold is larger than the second threshold.

2. The computer-implemented method of Claim 1, wherein each of the plurality of visual stimuli is a text string, wherein the true response corresponds to a predetermined letter existing in the text string.

3. The computer-implemented method of Claim 1, wherein each of the plurality of visual stimuli includes a first number adjacent to a second number, wherein the true response corresponds the first number equalling the second number except one digit being different, wherein preferably the one digit is a single digit.

4. The computer-implemented method of any preceding claim, wherein the plurality of visual stimuli are arranged over a plurality of pages displayed sequentially, wherein each page includes a different set of the plurality of visual stimuli.

5. The computer-implemented method of Claim 4, wherein the set of the plurality of visual stimuli on each page is arranged having visual stimuli in columns and rows.

6. The computer-implemented method of any preceding claim, wherein the first threshold is a 75^{th} percentile of perceptual speed scores, and wherein the second threshold is a 25^{th} percentile of perceptual speed score.

7. A computer-implemented method of displaying content on a user interface, the computer-implemented method comprising:
classifying a perceptual speed of a user of the user interface using the computer-implemented method of any preceding claim;
then, displaying interactive content for the user to interact with; and
simultaneously selectively displaying peripheral content, wherein a type and an amount of peripheral content being displayed is based on the classification of perceptual speed of the user.

8. The computer-implemented method of Claim 7, wherein the type of peripheral content is selected from a list of types of peripheral content including no peripheral content, congruent peripheral content, incongruent peripheral content, and a mix of congruent and incongruent peripheral content.

9. The computer-implemented method of Claim 8, wherein the selectively displaying the peripheral content comprises:
when the user is classified as having low perceptual speed, displaying the no peripheral content type, if the no peripheral content type is unavailable, then displaying the congruent peripheral content type, if congruent peripheral content type is unavailable, then displaying the incongruent peripheral content type, and if the incongruent peripheral content type is unavailable, then displaying the mix of congruent and incongruent peripheral content type.

10. The computer-implemented method of Claim 8 or Claim 9, wherein the selectively displaying the peripheral content comprises:
when the user is classified as having high perceptual speed, displaying the incongruent peripheral content type, if the incongruent peripheral content type is unavailable then displaying the mix of congruent and incongruent peripheral content type, if the mix of congruent and incongruent peripheral content type is unavailable then displaying the congruent peripheral content type, if the congruent peripheral content type is unavailable then displaying the no peripheral content type.

11. The computer-implemented method of Claim 8 or Claim 9, wherein the selectively displaying the peripheral content comprises: when the user is classified as having high perceptual speed, displaying the no peripheral content type, if the no-peripheral content type is unavailable then displaying the incongruent peripheral content type, if the incongruent peripheral content type is unavailable then displaying the mix of congruent and incongruent peripheral content type, if the mix of congruent and incongruent peripheral content type is unavailable then displaying the congruent peripheral content type.

12. A transitory, or non-transitory, computer-readable medium, having instructions stored thereon that when executed by one or more processors, cause the one or more processors to perform the computer-implemented method of any preceding claim.

13. A user interface comprising:
a display;
an input device for receiving using inputs; and
a controller including a processor and storage, the storage having instructions stored thereon that, when executed by the processor, cause the processor to perform the computer-implemented method of any of Claims 1 to 11.
